# EUROPÄISCHE PATENTSCHRIFT

(11) **EP 1 099 890 B1**
(45) Veröffentlichungstag und Bekanntmachung des Hinweises auf die Patenterteilung: **06.10.2004**
(21) Anmeldenummer: 00118764.0
(22) Anmeldetag: 30.08.2000
(51) Int. Cl.: F16J 15/08

(54) **Mehrlagige metallische Zylinderkopfdichtung**
Multi-layered metal cylinder head gasket
Joint de culasse métallique à couches multiples

(30) Priorität: 10.11.1999 DE 19954104
(43) Veröffentlichungstag der Anmeldung: 16.05.2001
(73) Patentinhaber: Federal-Mogul Sealing Systems GmbH, 57562 Herdorf (DE)
(72) Erfinder: Stapel, Klaus, 57562 Herdorf (DE)
(74) Vertreter: Becker Kurig Straus

(56) Entgegenhaltungen:
- US-A- 5 560 623
- US-A- 5 588 657

## Beschreibung

Die vorliegende Erfindung betrifft eine mehrlagige metallische Zylinderkopfdichtung bestehend aus einer ersten Funktionslage mit einer ersten Vollsicke, einer zweiten Funktionslage mit einer zweiten Vollsicke, einer zwischen der ersten und der zweiten Funktionslage angeordneten Distanzlage sowie einer Stopperlage, wie sie beispielsweise aus der US 5588657 bekannt ist.

Zwischen dem Zylinderkopf und dem Zylinderblock eines Verbrennungsmotors wird die Gasdichtigkeit mittels einer Zylinderkopfdichtung sichergestellt. Die Zylinderkopfdichtung ermöglicht diese Gasdichtigkeit mittels eines mehrschichtigen Lagenaufbaus, in dem ein oder mehrere flexible Elemente enthalten sind, so daß Schwingungen zwischen dem Zylinderkopf und dem Zylinderblock gasdicht ausgeglichen werden. Aus der DE 196 54 283 A1 sind mehrlagige Zylinderkopfdichtungen bekannt, wobei jeweils außenliegende Lagen aus beispielsweise Federstahl Vollsicken aufweisen, die entweder nach innen oder nach außen gerichtet sind. Die Vollsicken sind dazu beispielsweise radial übereinanderliegend in der Zylinderkopfdichtung angeordnet. Zusätzlich kann eine derartige Zylinderkopfdichtung neben einer Distanzlage auch eine Ausgleichslage mit einer Ausgleichsumbördelung aufweisen. Auch geht aus diesem Dokument hervor, daß ein Rand eines Metallbleches eines Laminats der Zylinderkopfdichtung so umgebördelt ist, daß ein Randbereich eines außenliegenden Bleches, der eine Vollsicke enthält, gegenüber dem Zylinderkopf oder dem Zylinderblock durch diesen umgebördelten Rand abgedeckt wird. Aus JP 6-85964 ist eine Zylinderkopfdichtung bekannt, die vier Lagen aufweist. Drei der vier Lagen haben eine Vollsicke, die übereinander in der Zylinderkopfdichtung angeordnet sind, wobei die außen angeordneten Vollsicken zum Inneren der Zylinderkopfdichtung weisen. Eine vierte Lage weist eine Umbördelung an ihrem einen wie auch diesem entgegengesetzten Rand auf.

Zwischen diesen beiden Umbördelungen ist ein Scheitelpunkt derjenigen Lage, die zwischen den beiden außen liegenden Lagen angeordnet ist, in direktem Kontakt mit dieser vierten Lage. Die vierte Lage ist daher eine Stopperlage. Aus U.S. 5,588,657 gehen ebenfalls mehrlagige Zylinderkopfdichtungen hervor, wobei die außenliegenden Lagen jeweils eine Vollsicke aufweisen und zwischen diesen eine Stopperlage angeordnet ist. Bei einer dieser bekannten Ausgestaltungen einer Zylinderkopfdichtung aus vier Lagen weisen die Scheitelpunkte der Vollsicken entweder in ein Inneres der Zylinderkopfdichtung oder von dem Inneren weg nach außen. Zwischen den Außenlagen kann weiterhin zumindest eine Zwischenlage sowie eine Lage aus Isolationsmaterial angeordnet werden.

Aufgabe der vorliegenden Erfindung ist es, eine Zylinderkopfdichtung zu schaffen, die eine hohe Linienpressung zur Verfügung stellt, andererseits eine ausreichende Federrate hat.

Diese Aufgabe wird mit einer mehrlagigen metallischen Zylinderkopfdichtung mit den Merkmalen des Anspruches 1 gelöst. Vorteilhafte Weiterbildungen sind in den abhängigen Ansprüchen angegeben.

Eine erfindungsgemäße mehrlagige metallische Zylinderkopfdichtung weist mehrere Öffnungen entsprechend einer Anzahl von Brennkammern einer Brennkraftmaschine auf. Die Zylinderkopfdichtung besteht aus einer ersten Funktionslage mit einer ersten Vollsicke, einer zweiten Funktionslage mit einer zweiten Vollsicke, einer zwischen der ersten und der zweiten Funktionslage angeordneten Distanzlage, die eben ist, sowie einer Stopperlage. Die Stopperlage hat einen umgebördelten Rand, der um die Öffnungen verläuft. Weiterhin liegt die Stopperlage an der zweiten Funktionslage an. Die erste Funktionslage bildet eine Außenlage der Zylinderkopfdichtung. Die erste Vollsicke der ersten Funktionslage und die zweite Vollsicke der zweiten Funktionslage weisen jeweils einen Scheitelpunkt auf, die einander entgegengesetzt nach außen weisen. Die Stopperlage bildet nun eine Außenlage der Zylinderkopfdichtung. Dadurch gelingt es, eine Flächenpressung aufzubauen, die in der Lage ist, insbesondere auch dynamische Schwingungen zwischen Zylinderkopf und Zylinderblock kompensieren zu können.

Vorteilhafterweise liegt die zweite Vollsicke auf der Stopperlage auf, so daß der Scheitelpunkt der zweiten Vollsicke mit der zweiten Funktionslage direkten Kontakt mit der Stopperlage hat. Die direkte Berührung verstärkt die erzeugte Flächenpressung. Gemäß einer Weiterbildung sind zwischen einem umgebördelten ersten Ende und einem umgebördelten zweiten Ende von benachbarten Rändern der Stopperlage der Scheitelpunkt der zweiten Vollsicke angeordnet. Dadurch wird die Vollsicke daran gehindert, vollständig flach gedrückt zu werden. Weiterhin kann die Federeigenschaft der Zylinderkopfdichtung dadurch eingestellt werden, daß der Rand der Stopperlage entweder nach innen oder aber nach außen umgebördelt wird. Bei einem nach außen umgebördelten Rand wird dieser vorzugsweise so gestaltet, daß auch bei hohen Preßkräften eine Schädigung des Zylinderblocks vermieden wird. Beispielsweise kann dazu der umgebördelte Rand rampenförmig gestaltet sein.

Obiger Aufbau der Zylinderkopfdichtung ermöglicht eine Realisierung einer hohen Linienpressung einer Vollsicke, so daß eine derartige Zylinderkopfdichtung sich insbesondere zur Verwendung bei Verbrennungsmotoren eignet, die eine hohe dynamische Auffederung des Zylinderkopfes infolge hoher Schwingungsamplituden haben. Die flach ausgebildete Stopperlage als Außenlage im Zusammenspiel mit der zweiten Vollsicke führt dazu, daß die entgegengesetzt angeordnete erste Funktionslage mit der ersten Vollsicke eine erhöhte Kraft ausüben kann, damit besonders gasdicht ist.

Weitere vorteilhafte Merkmale und Ausgestaltungen sind in der nachfolgenden Zeichnung näher dargestellt. Es zeigen:
- Figur 1: eine erfindungsgemäße mehrlagige metallische Zylinderkopfdichtung,
- Figur 2: einen Schnitt entlang der Linie II-II durch die Zylinderkopfdichtung gemäß Figur 1, und
- Figur 3: eine erste Funktionsschicht in einem eingebauten Zustand.

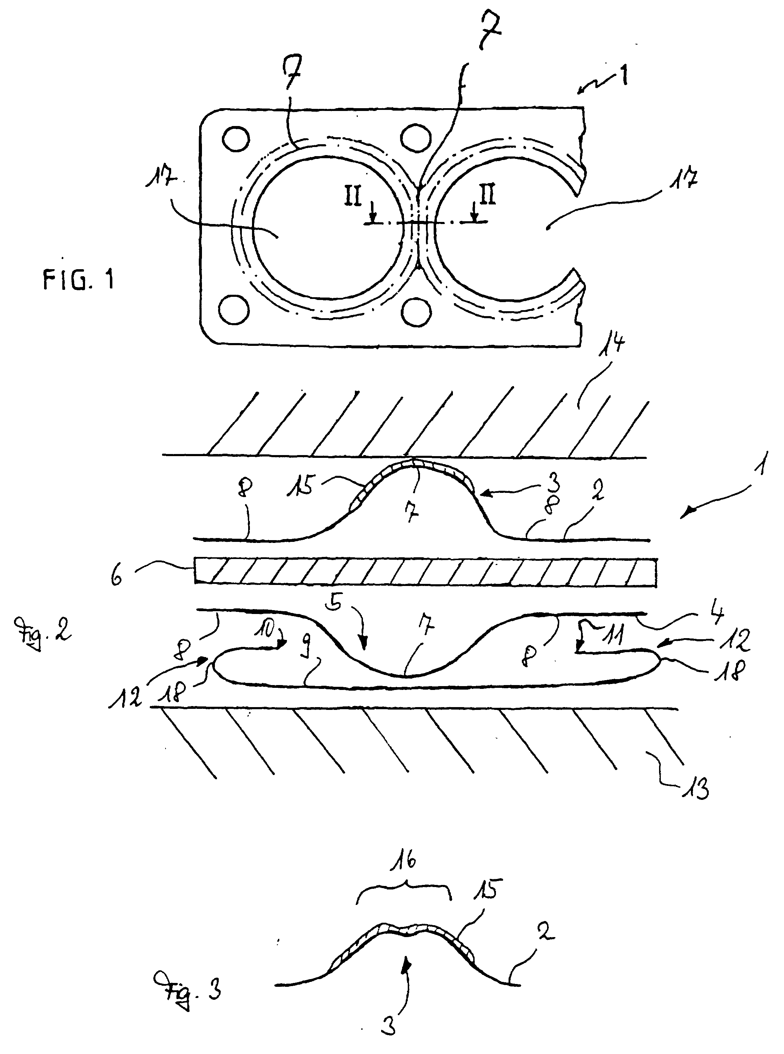

Figur 1 zeigt eine Zylinderkopfdichtung 1 mit zwei Öffnungen 17 entsprechend einer Anzahl von Brennkammern einer Brennkraftmaschine. In dieser Aufsicht sind Vollsicken als strichpunktierte Linien angedeutet, die Scheitelpunkte 7 aufweisen.

Figur 2 ist eine Schnittansicht entlang der Linie II-II durch die Zylinderkopfdichtung 1 gemäß Figur 1 und zeigt die Zylinderkopfdichtung 1 mit einer ersten Funktionslage 2 und einer ersten Vollsicke 3 sowie mit einer zweiten Funktionslage 4 mit einer zweiten Vollsicke 5. Die Lagen sind in dieser Darstellung auseinandergezogen, berühren sich jedoch im realen, eingebauten Zustand, um eine Gasdichtigkeit sicherzustellen. Zwischen der ersten Funktionslage 2 und der zweiten Funktionslage 4 ist eine Distanzlage 6 angeordnet. Die Distanzlage 6 weist im Gegensatz zu den beiden Funktionslagen 2, 3 im dargestellten Bereich keine Vollsicke auf. Die erste 3 und die zweite 5 Vollsicke haben jeweils einen Scheitelpunkt 7, die einander entgegengesetzt nach außen weisen. Daher sind die Sickenfüße 8 der Funktionslagen auch in Kontakt mit der Distanzlage 6. Der zweiten Funktionslage 4 benachbart angeordnet ist als weitere Lage eine Stopperlage 9. Die Stopperlage 9 liegt bezüglich des Aufbaus der Zylinderkopfdichtung 1 außen und bildet daher eine Außenlage ebenso wie die Funktionslage 1. Ein erstes Ende 10 eines Randes 18 ist ebenso wie ein zweites Ende 11 eines Randes 18 der Stopperlage 9 nach innen umgebördelt. Eine Umbördelung 12 kann so ausgeführt sein, daß das umgebördelte Ende 10, 11 flach aufliegt oder aber eine eine Rundung aufweist, so daß beispielsweise nur ein Teil der Umbördelung 12 aufliegt. Zwischen dem ersten 10 und dem zweiten Ende 11 ist der Scheitelpunkt 7 der zweiten Funktionslage 4 angeordnet. Durch eine als zumindest überwiegend als annähernd eben ausgeführte Stopperlage 9 führt eine über den Scheitelpunkt 7 der zweiten Funktionslage 4 aufgebrachte Last zu einer Verformung der zweiten Funktionslage 4. Diese ist jedoch durch die Umbördelung 12 begrenzt. Dadurch wird erzielt, daß eine Linienpressung über den Scheitelpunkt 7 der ersten Funktionslage 2 verstärkt wird. Wenn daher die zwischen einem Zylinderblock 13 und einem Zylinderkopf 14 angeordnete Zylinderkopfdichtung 1 besonders hohen dynamischen Kräften ausgesetzt wird, bleibt eine Gasabdichtung trotzdem gewährleistet. Vorzugsweise wird dafür die Zylinderkopfdichtung 1 so wie dargestellt eingebaut. Das bedeutet, daß die erste Vollsicke 3 am Zylinderkopf 14 anliegt. Weiterhin zweckmäßig ist es, wenn zumindest eine der Lagen eine Beschichtung aufweist. wobei es bevorzugt ist, wenn zumindest ein Bereich des Scheitelpunktes 7 der ersten Vollsicke 3 eine Beschichtung 14 hat.

Figur 3 zeigt die erste Funktionsschicht 2 aus Figur 2 im eingebauten, einsatzfähigem Zustand. Die erste Vollsicke 3 ist so ausgeführt und mit den übrigen Lagen der Zylinderkopfdichtung derartig abgestimmt, daß diese Vollsicke 3 eine w-förmige Gestalt 17 einnimmt. Dadurch wird die Abdichtung erhöht.

### Bezugszeichenliste

- 1: Vier-Lagen-Zylinderkopfdichtung
- 2: erste Funktionslage
- 3: erste Vollsicke
- 4: zweite Funktionslage
- 5: zweite Vollsicke
- 6: Distanzlage
- 7: Scheitelpunkt
- 8: Sickenfuß
- 9: Stopperlage
- 10: erstes Ende der Stopperlage
- 11: zweites Ende der Stopperlage
- 12: Umbördelung
- 13: Zylinderblock
- 14: Zylinderkopf
- 15: Beschichtung
- 16: w-förmige Gestalt
- 17: Öffnung
- 18: Rand

## Patentansprüche

1. Mehrlagige metallische Zylinderkopfdichtung (1) mit mehreren Öffnungen (17) entsprechend einer Anzahl von Brennkammern einer Brennkraftmaschine, bestehend aus
- einer ersten Funktionslage (2) mit einer ersten Vollsicke (3),
- einer zweiten Funktionslage (4) mit einer zweiten Vollsicke (5),
- einer zwischen der ersten (2) und der zweiten (4) Funktionslage angeordneten Distanzlage (6), sowie
- einer Stopperlage (9) mit einem um die Öffnungen (17) verlaufenden umgebördelten Rand (18), wobei die Stopperlage (9) an der zweiten Funktionslage (4) anliegt,
wobei die erste Funktionslage (2) eine Außenlage der Zylinderkopfdichtung (1) bildet und die erste Vollsicke (3) der ersten Funktionslage (2) und die zweite Vollsicke (5) der zweiten Funktionslage (4) jeweils einen Scheitelpunkt (7) aufweisen, die einander entgegengesetzt nach außen weisen,
**dadurch gekennzeichnet, daß**
die Stopperlage (9) eine Außenlage bildet.

2. Zylinderkopfdichtung nach Anspruch 1, **dadurch gekennzeichnet, daß** der Scheitelpunkt (7) der zweiten Vollsicke (5) der zweiten Funktionslage (4) direkten Kontakt mit der Stopperlage (9) hat.

3. Zylinderkopfdichtung nach Anspruch 1 oder 2, **dadurch gekennzeichnet, daß** der Scheitelpunkt (7) der zweiten Vollsicke (4) zwischen einem umgebördelten ersten (10) und zweiten (11) Ende von gegenüberliegenden Rändern (18) der Stopperlage (9) angeordnet ist.

4. Zylinderkopfdichtung (1) nach einem der Ansprüche 1, 2 oder 3, **dadurch gekennzeichnet, daß** zumindest eine der Lagen eine Beschichtung (15) aufweist.

5. Zylinderkopfdichtung (1) nach Anspruch 4, **dadurch gekennzeichnet, daß** zumindest ein Bereich des Scheitelpunktes (7) der ersten Vollsicke (3) eine Beschichtung (15) hat.

6. Zylinderkopfdichtung (1) nach einem der vorhergehenden Ansprüche, **dadurch gekennzeichnet, daß** der Rand (18) der Stopperlage (9) nach innen umgebördelt ist.

7. Zylinderkopfdichtung (1) nach einem der vorhergehenden Ansprüche 1 bis 5, **dadurch gekennzeichnet, daß** der Rand (18) der Stopperlage (9) nach außen umgebördelt ist.

8. Zylinderkopfdichtung (1) nach einem der vorherigen Ansprüche, mit einem Zylinderkopf (14) und einem Zylinderblock (13), wobei die Zylinderkopfdichtung (1) zwischen dem Zylinderkopf (14) und dem Zylinderblock (13) angeordnet ist, **dadurch gekennzeichnet, daß** die erste Vollsicke (3) am Zylinderkopf (14) anliegt.

## Claims

1. Multilayer metal cylinder head gasket (1) with a plurality of apertures (17) corresponding to a number of combustion chambers of an internal-combustion engine, consisting of
- a first functional layer (2) with a first full bead (3),
- a second functional layer (4) with a second full bead (5),
- a spacer layer (6) arranged between the first (2) and the second (4) functional layers, and
- a stopper layer (9) with a flanged edge (18) extending around the apertures (17), the stopper layer (9) resting on the second functional layer (4),
wherein the first functional layer (2) forms an outer layer of the cylinder head gasket (1) and the first full bead (3) of the first functional layer (2) and the second full bead (5) of the second functional layer (4), which point outwardly in opposite directions to one another, each have a vertex (7), **characterised in that** the stopper layer (9) forms an outer layer.

2. Cylinder head gasket according to Claim 1, **characterised in that** the vertex (7) of the second full bead (5) of the second functional layer (4) has direct contact with the stopper layer (9).

3. Cylinder head gasket according to Claim 1 or 2, **characterised in that** the vertex (7) of the second full bead (4) is arranged between a flanged first (10) and second (11) end of opposing edges (18) of the stopper layer (9).

4. Cylinder head gasket (1) according to any one of Claims 1, 2 or 3, **characterised in that** at least one of the layers has a coating (15).

5. Cylinder head gasket (1) according to Claim 4, **characterised in that** at least one region of the vertex (7) of the first full bead (3) has a coating (15).

6. Cylinder head gasket (1) according to any one of the preceding claims, **characterised in that** the edge (18) of the stopper layer (9) is flanged inwardly.

7. Cylinder head gasket (1) according to any one of the preceding Claims 1 to 5, **characterised in that** the edge (18) of the stopper layer (9) is flanged outwardly.

8. Cylinder head gasket (1) according to any one of the preceding claims, comprising a cylinder head (14) and a cylinder block (13), the cylinder head gasket (1) being arranged between the cylinder head (14) and the cylinder block (13), **characterised in that** the first full bead (3) rests on the cylinder head (14).

## Revendications

1. Joint de culasse (1) métallique multicouches, présentant plusieurs ouvertures (17) en correspondance du nombre de chambres de combustion d'un moteur à combustion interne, constitué par
- une première couche fonctionnelle (2) présentant une première moulure pleine (3),
- une deuxième couche fonctionnelle (4) présentant une deuxième moulure pleine (5),
- une couche d'écartement (6) agencée entre la première (2) et la deuxième couche fonctionnelle (4), ainsi que par
- une couche d'arrêt (9) présentant un bord rabattu (18) s'étendant autour des ouvertures (17), la couche d'arrêt (9) prenant appui contre la deuxième couche fonctionnelle (4),
la première couche fonctionnelle (2) formant une couche extérieure du joint de culasse (1), et la première moulure pleine (3) de la première couche fonctionnelle (2) et la deuxième moulure pleine (5) de la deuxième couche fonctionnelle (4) présentant respectivement des sommets (7) qui sont dirigés en sens opposés vers l'extérieur,
**caractérisé en ce que**
la couche d'arrêt (9) forme une couche extérieure.

2. Joint de culasse selon la revendication 1, **caractérisé en ce que** le sommet (7) de la deuxième moulure pleine (5) de la deuxième couche fonctionnelle (4) est en contact direct avec la couche d'arrêt (9).

3. Joint de culasse selon l'une ou l'autre des revendications 1 et 2, **caractérisé en ce que** le sommet (7) de la deuxième moulure pleine (4) est agencé entre une première extrémité rabattue (10) et une deuxième extrémité rabattue (11) de bords opposés (18) de la couche d'arrêt (9).

4. Joint de culasse (1) selon l'une des revendications 1, 2 ou 3, **caractérisé en ce qu'**une au moins des couches présente un revêtement (15).

5. Joint de culasse (1) selon la revendication 4, **caractérisé en ce qu'**une zone au moins du sommet (7) de la première moulure pleine (3) présente un revêtement (15).

6. Joint de culasse (1) selon l'une des revendications précédentes, **caractérisé en ce que** le bord (18) de la couche d'arrêt (9) est rabattu vers l'intérieur.

7. Joint de culasse (1) selon l'une des revendications 1 à 5, **caractérisé en ce que** le bord (18) de la couche d'arrêt (9) est rabattu vers l'extérieur.

8. Joint de culasse (1) selon l'une des revendications précédentes, avec une culasse (14) et avec un bloc-cylindres (13), le joint de culasse (1) étant agencé entre la culasse (14) et le bloc-cylindres (13), **caractérisé en ce que** la première moulure pleine (3) prend appui contre la culasse (14).
